Europäisches Patentamt

European Patent Office

Office européen des brevets

(19)

(11) Publication number: 0 425 771 A2

# (12) EUROPEAN PATENT APPLICATION

(21) Application number: 90114826.2

(22) Date of filing: 02.08.90

(51) Int. Cl.⁵: G06F 12/14

(30) Priority: 03.11.89 US 431508

(43) Date of publication of application:
08.05.91 Bulletin 91/19

(84) Designated Contracting States:
DE FR GB

(71) Applicant: International Business Machines
Corporation
Old Orchard Road
Armonk, N.Y. 10504(US)

(72) Inventor: Kienzle, Martin Gerhard
David Road
Somers, New York 10589(US)
Inventor: Lett, Alexander Stafford
402 MacGregor Drive, RD1
Mahopac, New York 10541(US)
Inventor: Tetzlaff, William Harold
37 Fox Den Road
Mt. Kisco, New York 10549(US)

(74) Representative: Jost, Ottokarl, Dipl.-Ing.
IBM Deutschland GmbH Patentwesen und
Urheberrecht Schönaicher Strasse 220
W-7030 Böblingen(DE)

(54) An efficient mechanism for providing fine grain storage protection intervals.

(57) There is provided a system and method for protecting data stored in a computer system by restricting access to the stored information. The access restriction involves the use of a group of protection bits (48) stored along with the address of the stored information. Each set of bits corresponds to a segment of the stored information. In this way, protection of portions of information which have a size less than the address translation element size. For systems which use page segments of memory, protection can take place for portions of information which are less than the page size of the particular system.

FIG. 1

```
          START

PROCESSOR: PASS OPERAND        ~10
ADDRESS TO TLB (IF PRESENT)

TLB: DETERMINE REAL            ~12
MEMORY ADDRESS FIELD
PROTECTION INFO

14~                                    ~16
TLB: PASS REAL MEMORY      TLB: PASS FIELD
ADDRESS TO MAIN MEMORY     PROTECTION BITS TO
                           PROCESSOR

18~                                    ~20
MAIN MEMORY: TRANSFER      PROCESSOR: USE AUTHORITY
DATA TO / FROM             MASK AND FIELD PROTECTION
PROCESSOR                  BITS TO DETERMINE
                           ALLOWED TYPE OF ACCESS

              VIOLATION ?  ~22
         NO                   YES
24~ EXECUTE            TERMINATE:        ~26
    OPERATION          IMPROPER ACCESS
```

## AN EFFICIENT MECHANISM FOR PROVIDING FINE GRAIN STORAGE PROTECTION INTERVALS

### Field of the Invention

The present invention relates generally to data protection mechanisms for restricting access to stored information in a computer system, and more particularly to fine grain protection of data which is less than the address translation interval in size.

### Background of the Invention

Many large computer systems, for instance the IBM S/370 system, provide a means for protecting stored data against unauthorized use. This memory protection is generally applied to protection intervals of one page of memory. On the S/370 system, the page size is 4096 (4K) bytes. Protection of stored information involves access limitations. The three usual types of storage protection involve read protection, write protection or instruction execution protection. Most systems implement only read protection and write protection. Present systems generally use a key comparison method for protection of the 4K page of information stored in virtual memory.

Key comparison methods involve a comparison between a bit or group of bits associated with the page of memory and the key associated with a process and loaded into the program status word. The comparison between the bit(s) and the key is made when an operand is loaded from main memory into the processor or when an operand is stored by the processor into main memory. All data on a page of memory have the same storage key associated with them. Therefore, the granularity of protection is one page. In many systems, including the S/370, a page has 4K bytes. Other systems, such as the AS/400 system, have different page sizes.

The processor accesses operands using virtual addresses. In order for an operand to be loaded from main memory into the processor, or to be stored from the processor into main memory, the virtual memory address is translated into a main memory address. This translation is performed by looking up the main memory address in the translation tables (page and segment tables). Next, if storage access protection through key protection is enforced, it is determined whether or not the data can be used for the intended purpose. If access is allowed, the information is used by the processor in whatever operation it is performing.

It is customary for processors using a virtual memory scheme to use a translation look-aside buffer (TLB) for maintaining the translation information (from segment and page tables) for those virtual memory locations which are receiving the greatest amount of access activity. The TLB contains corresponding pairs of virtual addresses and main memory addresses. The choice of which virtual address pairs are stored in the TLB may be made using a least recently used (LRU) algorithm, or an algorithm that is tailored to the specific tasks which a processor is handling.

In order to access a virtual memory address, the processor would first poll the TLB to obtain the main memory address. If there is not an entry in the TLB, then a TLB-miss operation is performed which obtains the translation information directly from the translation tables.

The purpose of the TLB is to speed up virtual memory access time, which in turn speeds up overall program execution time. Therefore, the TLB is usually physically close to the processor logic and is made of very fast and consequently, very expensive, memory. By keeping only the real and virtual memory address pairs that are most likely to be used in the near future (using an LRU algorithm) the size and costs of the TLB can be kept to a minimum.

Like the TLB, the storage location for the protection key information is also made of very fast and consequently, relatively expensive, memory. This is necessary to allow for quick protection checks by the processor. Since the key protection information is associated with the main memory address of a page, the main memory address of an operand whose protection status is being checked is obtained before the protection information is determined. Thus, access under the key protection method generally occurs only after the TLB lookup has been performed and not in parallel with it. Further, key protection extends not only to the storage references by the processor, but also to storage references by the I/O subsystem. I/O access to key storage increases the complexity and the cost of a key storage implementation system.

The complexity costs and size limitations of key protection methods make it impractical and inefficient to protect sections of storage smaller than a page of memory, even though in many applications it would be desirable to modify information stored in sections smaller than the page while protecting the adjacent sections.

### Summary of the Invention

The present invention is a system and method for protecting data stored in a computer system by restricting access to the stored information. The access restrictions can apply to portions of the stored information which are less than the page size of the particular system.

The access restriction involves the use of protection bits which are stored along with the addresses of the stored information. A set of one or more protection bits corresponds to a segment or portion of the stored information. This allows for designating access restrictions to individual portions of the stored information. Providing access restriction capability is referred to as Fine Grain Storage Protection.

The set of one or more protection bits represents different types of protection fields. There could be a single bit which represents the protected/not protected state with the access restrictions specified in a common register. There could be multiple bits with each bit representing one type of storage protection. Alternatively, the multiple bits in a set could be used as a pattern (e.g. 00,01,10,11) to represent specif ic claims of storage protection.

Associating the protection bits with the address information of the stored information allows for faster determinations of permissible or impermissible access requests. The determination is made substantially parallel to the retrieval of the stored information.


Brief Description of the Figures

Fig. 1 is a flowchart diagram which illustrates the operation of the field protection facility.
Fig. 2 is a block diagram of an exemplary embodiment of the field protection facility.
Fig. 3 is a data structure diagram of an embodiment of the table structures for field protection information in main memory.
Fig. 4 is an overview system diagram of the field protection facility.


Detailed Description of the Invention

The present invention allows for fine grain storage protection (storage protection for intervals less than a page) without having to substantially increase the main memory space which contains the protection information and without sacrificing execution and access speed.

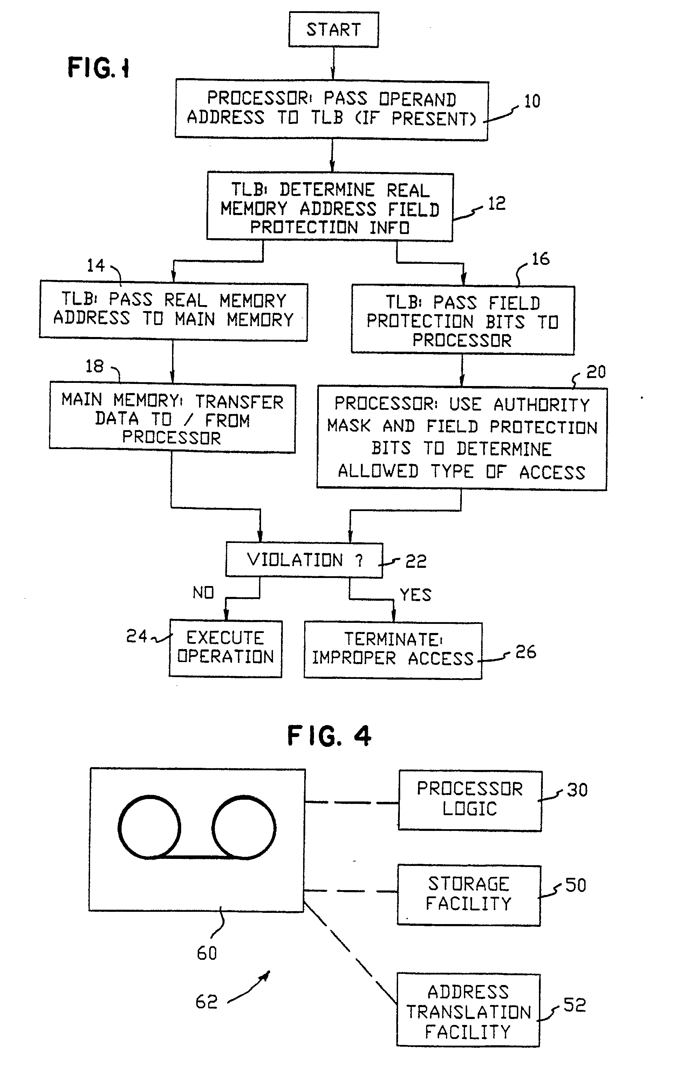

There is shown in Fig. 1 a flow diagram of the fine grain protection method operation used in the exemplary embodiment of the invention. When the processor needs to access a given storage location, it first passes the operand address to the TLB as shod in block 10. If the operand address is in virtual memory, the TLB contains pairs of main and virtual memory addresses with their associated field protection bits. If the operand address is in real memory, the TLB contains just the main memory address and its associated field protection bits.

Processing continues to block 12 where the TLB is scanned for this operand address and if present, the main memory address (for virtual memory reference) and the field protection associated with the operand address is determined. If not, a TLB miss has occurred and the translation tables in main memory are scanned to obtain the main and virtual memory address pair (for a virtual memory reference) and the associated field protection bits which are now stored in the TLB.

Once the TLB information is determined, control passes to main memory in order to obtain the stored information, as shown in block 14. In parallel with this operation, the TLB also passes the field protection information to the processor (using field protection logic) for comparison. Block 18 shows the main memory initiating the transfer of the data to or from the processor, depending on whether it is a read or a write operation, being executed by the processor. The authority of the processor program, to access storage is specified in a control register. The processor can thereby mask off protection violations without having to change any of the protection fields.

Concurrently with what is shown in block 20, the processor is comparing the authority mask with the field protection bits associated with the data to which the processor is requesting access to determine the allowed type of access

In block 22, a determination is made whether or not a violation occurs. If the type of access required (i.e., read or write or execute instruction) does not correspond to the type of access allowed, a violation has occurred and the access to the data is denied, as shown in block 26. If there is no violation of access restriction, then processing continues as shown in block 24. In the case of a violation, the transfer of data from the processor to the main memory takes long enough to allow for the termination of the store operation before a change to the main memory can occur. Similarly, the transfer of data from the main memory to the processor takes longer than the time needed by the processor to determine violations. In the case of a violation, the transfer can be terminated before the processor can execute any instruction on the data.

This method is much faster than the key storage method since there is no additional key storage table that must be accessed prior to determining whether or not a given operation is protected or not. Further, if the field protection bits are in the TLB it is not necessary to access the main memory before it can be determined whether or not a given operation is allowed.

In the proposed system, the access determination is accomplished concurrently with the accessing and transfer of the main memory data. Thus, the two steps of the key protection method are able to be accomplished simultaneously in the present system using protection fields. Further, by keeping the field protection bits in the TLB, the benefit of high speed, close proximity memory is added to the simultaneous operation benefit, providing an even greater speed advantage for the majority of memory accesses. This is true since most operand references will be found in the TLB. Even the virtual memory locations not cached in the TLB would benefit from the protection method. This benefit arises because the translation tables, where the protection information of this information is contained, are necessarily accessed any time a virtual memory translation is necessary and the information is not located in the TLB. All of the above points allow and encourage the protection of granularities smaller than one page.

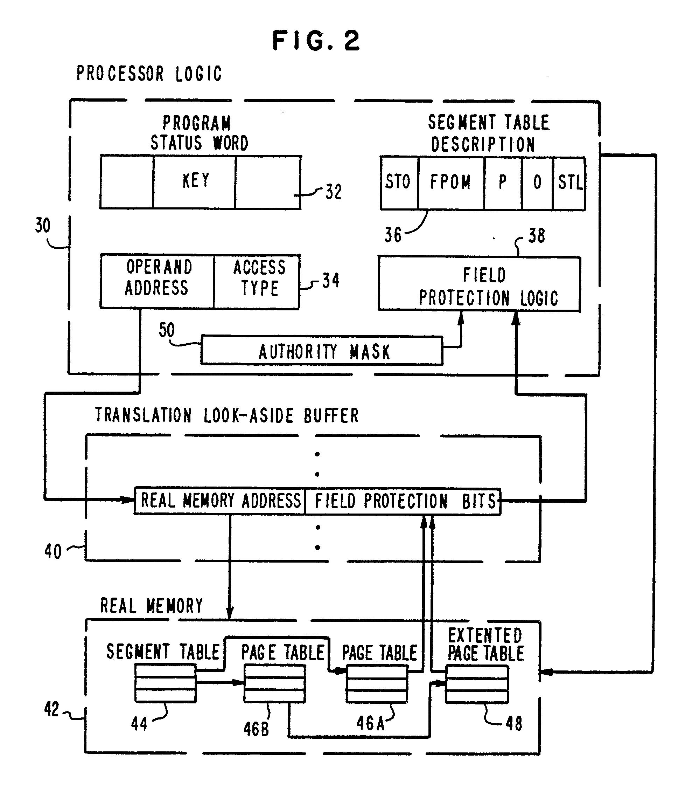

Fig. 2 shows an overview of the field protection facility for providing storage protection of groups of 16 bytes using a single protection bit per interval. The field protection control mask is introduced to allow a single bit per interval to be differently interpreted depending on the field protection control mask contents. As already stated, the invention is designed to afford protection to granularities smaller than the one page that is presently being used. The example of the present invention involves a 16 byte protection granularity and the examples herein described refer to a 16 byte granularity. Protection granularities smaller and larger than 16 bytes are possible with corresponding changes in the system to account for the size chosen as the protection field. Adjustments to accommodate these granularities would be apparent to one skilled in the art.

Processor logic 30 includes the program status word (PSW) 32, the segment table designation (STD) 36, the field protection logic 38, the authority mask 50, and the operand address register 34. Operand address register 34 also contains the type of access associated with the operation the processor is about to perform on the operand stored in the memory location being accessed. Possible types of access are read (fetch), write (store) and execute. The program status word also contains the key which is the access authorization for the key protection of the user and/or program that is requesting access to the desired information. The field protection facility in Fig. 2 also includes a translation look-aside buffer (TLB) 40 in which is contained the pertinent information of the most recently and most predominantly accessed memory locations. As has already been described, the TLB uses very fast memory, physically located close to the processor to speed access times for virtual memory lookups.

Also included in the field protection facility of Fig. 2 is the main memory 42. It contains, among other data, the segment table 44, the various page tables 46A and 46B and the extended page table 48 of the current embodiment of this invention. The majority of the components are standard in the computer architecture art and understood by those skilled in this art. Associating the field protection bits with the translation look-aside buffer, maintaining the field protection control mask (which is located in the segment table designation) and the authority mask, and combining these elements with the field protection logic, to determine access type, are all new aspects of the field protection facility of the present invention.

Located in the tables of the TLB, as well as in the page table entries of main memory, are the field protection bits that specify whether the field protection function specified in the field protection control mask (FPCM) applies to the protection field being requested for access.

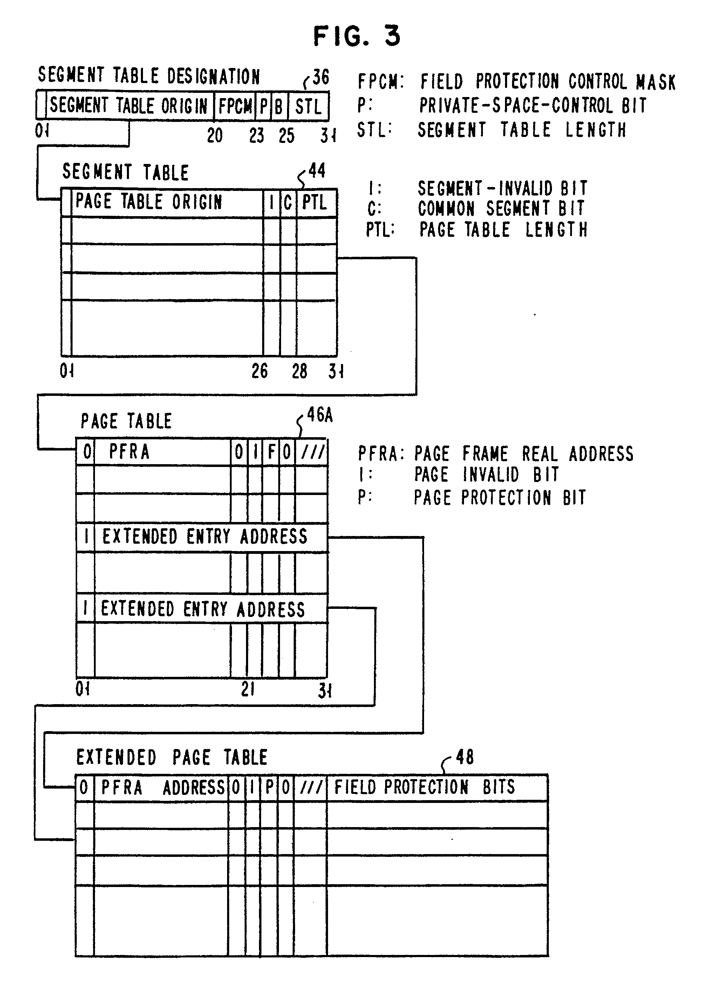

The field protection bits for all memory pages are kept in main memory and if recently issued, in the TLB. When the translation information of a virtual memory page is loaded into the TLB from the translation tables in main memory, the field protection bits are loaded into the TLB as well. Thus, for every page for which the TLB holds the translation information, the TLB also holds the field protection bits. This allows for fast and efficient determinations of access allowability. The field protection information for all operand memory pages must be stored in main memory so that it can be loaded into the TLB in the case of a TLB miss. The TLB miss occurs when an operand access is desired and the associated information is not located in the TLB. This occurs for information that has not been recently used by the processor. Since the field protection bits and any translation information will always be needed together, it is economical to manage them together in main memory as shown in Fig. 3.

Note that the invention does not imply any particular form of address translation and thus is operable with ordinary page and segment table translation as used, for instance, by IBM's ESA/370, as well as with systems using inverted page tables such as an IBM AS/400 system. In fact, the invention is even operable with systems not using virtual memory at all. In the case of no virtual memory, the TLB would have no virtual memory translation information, only field protection information. The field protection facility does not need to replace existing protection mechanisms, but can coexist with them in a system to enhance the protection of that particular system. The field protection facility of the present invention can coexist with the prior art key protection facilities. In the case of a combination of this sort, the field protection facility would add fine grain protection and added modes of protection such as execute-only protection.

When the processor logic 30 needs to access a memory location, the operand address 34 is used to locate the main memory address. The first lookup by the processor is done in the TLB. Should a corresponding active entry be located in the TLB, a comparison is done in the field protection logic block 38 between the field protection bits which determine the types of permissible access for the particular user/program and the access type being requested. The field protection control mask located in the segment table designation is available to control the interpretation of the translation tables which describe the address space. The FPCM applies to the entire address space which represents a single complex data object. Obvious protection functions to be specified by the FPCM are to prohibit any of access types of readings writing or executing code based on a protection field.

As long as the operand address that is being referenced is located in the TLB, the field protection determination can be executed. However, when a TLB miss occurs, the protection information, as well as any translation information, is fed from the segment and page tables in main memory. Fig. 3 is an illustration of the table structures for field protection information in main memory. Again, the information located in the TLB is taken from the actual protection information located in main memory.

Fig. 3 shows segment table designation 36, segment table 44, page table 46A, and extended page table 48. In the segment table designation, there is located the segment table origin address. Also included is the field protection control mask (FPCM) which controls the interpretation of the protection information, a private-space-control bit (P) and the segment table length (STL). The segment table contains the page table origin (PTO) address; the segment-invalid-bit (1); the common segment bit (C); and the page table length (PTL). The page table 46A (representative of the plurality of page tables used in the 370 architecture) contains the page frame address in main memory (PFRA); a page-invalid-bit (1); and a page-protection-bit (P). Under the present protection scheme of the present invention, the first bit in the page table entry would either be a 0 or a 1. The 0 indicates that there are no protections bits of the present invention whereas a 1 indicates that there are protection bits for the protection fields (in this case 16 bytes long). A 0 as the first bit of the page table entry indicates that this page has no field protection, and that the page table entry is to be interpreted as currently specified by the architecture. A 1 as the first bit in the page table entry indicates that the field protection bits are located in the extended page table which should be referenced for this information. The contents of the page table entry are now interpreted not as a page table entry, but as an address pointing to the extended page table entry. The extended page table 48 contains all of the standard information in the page table as well as the field protection bits which control the type of access allowed for increments of 16 bytes. This means that for the standard 4K byte page of the 370 architecture there must be 256 bits with each bit representing the protection access allowed for a 16 byte protection granularity.

Fig. 3 then further illustrates the logic flow of the protection facility when there is a TLB miss. The segment table designation 36 points to the segment table origin and from there the processor locates the segment table 44. Each segment table entry points to an individual page table. Segment table 44 contains an entry pointing to page table 46A. Page table 46A contains the corresponding address to main memory containing the information to be accessed as does extended page table 48. The difference between page table 46A and extended page table 48 is the inclusion of field protection bits in the extended page table 48. It is understood that the extended page table is one embodiment of the present invention. It is not necessary to have an extended page table 48 as page table 46A could be extended in itself to include field protection bits.

The field protection bits in the page table (or extended page table 48) reflect the permanent properties of a memory page. Therefore, they are stored in external storage if the page is paged out, in the same way as storage keys are currently maintained. Without the field protection facility (Fig. 2), the page tables of an address space have only temporary significance. A page table can be discarded when all the pages of the corresponding table have been paged out. For some uses of the field protection facility, the extra protection information may be maintained by the file system. One example of this is the execute-only protection where the file system retains information as to what parts of a module are code, and what parts are data.

After a protection bit in a page table entry is changed, the current value of the protection bit is purged from all TLB's in a system. Therefore, an IPTE instruction to invalidate that particular TLB entry in all CPU's follows a change in a protection bit. Alternately, an equivalent function should be part of any instruction modifying protection bits.

This added function is considered when evaluating the performance of functions related to field protection.

Another implementation using a set of multiple protection bits to represent the protection states for each interval rather than a common description in the field protection control mask as previously described is possible. This implementation would have the advantage that the protection states for different intervals could be different. It would, however, require more page table storage and TLB storage than the previous description.

This invention can be used in conjunction with other protection mechanisms such as storage keys, to provide very flexible and sophisticated protection schemes. For example, the storage keys provide different protection domains, and inside each of the domains, the field protection mechanism provides fine grain protection. For this type of protection scheme, and possibly even in the absence of the field protection mechanism, it would be advantageous to move the storage keys from the current key storage and locate them also in the page table. An alternative method would be to maintain the storage keys in the storage key array (or similar storage key storage facility in non IBM 370 systems) and upon a first access, move the storage key values into the translation look-aside buffer (or area of recent address translation operations in non IBM 370 systems). This different implementation of storage keys would extend some of the performance advantages of this invention to the storage key protection. Combinations with other storage protection mechanisms such as the authority index or the extended authority index in the ESA/370 architecture are also possible.

There is shown in Fig. 4 a field protection facility system 62. System 62 contains a computer 60 having processor logic 30, storage facilities 50 and address translation facilities 52. In the case of the IBM 370 architecture, the address translation facilities include a translation look-aside buffer 40, in which is contained translation information for virtual memory locations that are receiving the greatest amount of access activity. In the case of a 370 system, the present invention would maintain protection bits associated with each address of stored information in the translation look-aside buffer. Other systems may contain memory tables of a different type in their address translation facilities.

Hardware architectures, other than the 370 architecture, sometimes use a similar two level (segment table to page table) virtual-address-to-real-address translation scheme or may use quite different methods. In general, the address lookup is accomplished through some form of memory table scheme. Because of the time needed for the lookup, it is normal to include a "look-aside" buffer or area of recent translations. In every case, the protection information should be kept in the memory tables that are used for converting to real addresses and should also be moved to a "look-aside" area if one is present, whenever translations take place.

In systems that use forward translations, at least one table is used for address translation. If there is only one table, the virtual memory address is used as an offset into that table to fetch the real address of the page being accessed. The additional protection bits of the present invention should be stored either with the table that contains the real address information or with another table entry that parallels it. If there are multiple tables in which segments of the virtual address are used for successive offsets into additional tables, then the protection bits of the present invention should be associated with the final table that contains the real page address or in a parallel table.

Another method for address translation involves inverted page tables. When inverted page tables are used, a virtual address is associated with each real address in a table that is organized by real addresses. This method has the advantage of having a table that grows with the size of real memory instead of with the size of virtual memory.

The method usually involves some form of hash table structure for converting from virtual addresses to real addresses in order to effectuate fast search times. The hash table is normally created and changed via software while being used by hardware during address translation. Oftentimes, the entire virtual page address is hashed, and then used as an offset into a memory table. Collisions caused by the hashing are then handled either by a collision chain or some other means for using unfilled entries in the table.

In order to have good performance despite the number of storage locations used for a lookup, a "look-aside" area of recent translations is normally maintained. The protection bits of the present invention should be kept in the inverted page table of this type of architecture at a point that is associated with each page of real memory. The protection bits should be placed in the "look-aside" area along with the virtual and corresponding real addresses, whenever translations occur.

## Claims

1. A method for establishing a data protection mechanism for restricting access to information stored in a plurality of memory locations having unique addresses in a computer having storage facilities and address translation facilities comprising the steps of:

a) establishing an authorization mask containing bits which designate permissible types of access requests to the stored information;

b) establishing a plurality of protection bits associated with an address of the stored information with one or a group of said protection bits corresponds to a portion of the information; and

c) storing said bits with said addresses of the stored information in said address translation facility.

2. A method for establishing a data protection mechanism as described in claim 1 in which violations of access restructions established for said information further comprise the steps of:

a) comparing, in response to a request to access a portion of the said information, said protection bits corresponding to said requested portions of the said information and said authorization mask to determine if a violation has occurred due to an impermissible type of access having been requested; and

b) allowing access to the requested portion of the said information if no violation has occurred and denying access if a violation has occurred.

3. The method of claim 2 wherein a set of said protection bits corresponds to a portion of the stored information which is less than 4K bytes in size.

4. The method of claim 2 wherein each of said protection bits corresponds to a portion of the stored information which is less then 4K bytes in size and a field protection control mask is used for determining whether a violation has occurred.

5. The method of claim 2 wherein the computer is an IBM 370 containing main memory locations and a program status word and wherein the address translation facility includes a translation look-aside buffer, a segment table and page tables.

6. The method of claim 4 wherein said protection mask is stored in the program status word and said method comprises the further steps of:

a) storing said protection bits in the translation look-aside buffer when translation information for said information stored in said memory facility is loaded into the translation look-aside buffer;

b) reading said protection bits stored in the translation look-aside buffer at the time the translation look-aside buffer is accessed for translation inf ormation, and

c) comparing said protection bits from the translation look-aside buffer to said authority mask at substantially the same time that said requested information is accessed in main memory.

7. A storage protection system for restricting access to information stores in a plurality of locations having unique addresses in a computer having storage facilities and address translation facilities by determining violations of access restriction established for said information, said system comprising:

a) means for establishing an authorization mask containing bits which designate permissible types of access requests to the stored information;

b) means for establishing a plurality of protection bits associated with each address of the stored information, each set of said protection bits corresponding to a position of the stored information;

c) means for storing said bits with each stored address of the stored information in said address translation facility;

d) means for comparing, in response to a request to access a portion of the stored information, said protection bits corresponding to said requested portions of the stored information and said authorization mask to determine if a violation has occurred due. to an impermissible type of access having been requested; and

e) means for allowing access to the requested portion of the stored information if no violation has occurred and denying access if a violation has occurred.

8. A storage protection system including storage keys and a protection key for restricting access to information stored in a plurality of memory locations having unique addresses in a computer having storage facilities and address translation facilities comprising:

a) a plurality of storage keys, each storage key identifying protection attributes associated with a page of memory;

b) means for reading in and storing said storage keys into a translation look-aside area of recent address translations; and

c) means for comparing said storage keys to the protection key for determining permissible access to the page of memory.

9. The storage protection system of claim 8 wherein the translation look-aside area of recent address translations is a translation look-aside buffer.

10. The storage protection system of claim 8 wherein the computer is an IBM 370 series computer.

11. The storage protection system of claim 8 wherein the storage keys read into and stored in the translation look-aside area of recent address translations are read from a page table.

12. The storage protection system of claim 8 wherein the storage keys read' into and stored in the translation look-aside area of recent address translations are read from a storage key array.

13. A storage protection system including storage keys and a protection key for restricting access to information stored in a plurality of memory locations having unique addresses in a computer having storage facilities and address translation facilities comprising the steps of:

a) establishing a plurality of storage keys, each storage key identifying protection attributes associated with a page of memory;

b) reading in and storing said storage keys into a translation look-aside area of recent address translations;

c) comparing said storage keys to the protection key for determining if an access violation has occurred; and

d) permitting access to the page of memory if no access violation has occurred.

**FIG. 1**

START

PROCESSOR: PASS OPERAND
ADDRESS TO TLB (IF PRESENT) — 10

TLB: DETERMINE REAL
MEMORY ADDRESS FIELD — 12
PROTECTION INFO

14 — TLB: PASS REAL MEMORY
ADDRESS TO MAIN MEMORY

16 — TLB: PASS FIELD
PROTECTION BITS TO
PROCESSOR

18 — MAIN MEMORY: TRANSFER
DATA TO / FROM
PROCESSOR

20 — PROCESSOR: USE AUTHORITY
MASK AND FIELD PROTECTION
BITS TO DETERMINE
ALLOWED TYPE OF ACCESS

VIOLATION ? — 22

NO          YES

24 — EXECUTE
OPERATION

TERMINATE:
IMPROPER ACCESS — 26

**FIG. 4**

PROCESSOR
LOGIC — 30

STORAGE
FACILITY — 50

60

62

ADDRESS
TRANSLATION — 52
FACILITY

9

# FIG. 2

# FIG. 3

SEGMENT TABLE DESIGNATION  ⌐36

| | SEGMENT TABLE ORIGIN | FPCM | P | B | STL |

0⌐                      20   23   25     3⌐

FPCM:   FIELD PROTECTION CONTROL MASK
P:       PRIVATE-SPACE-CONTROL BIT
STL:     SEGMENT TABLE LENGTH

SEGMENT TABLE          ⌐44

| PAGE TABLE ORIGIN | I | C | PTL |
| | | | |
| | | | |
| | | | |
| | | | |

0⌐                   26   28   3⌐

I:        SEGMENT-INVALID BIT
C:       COMMON SEGMENT BIT
PTL:    PAGE TABLE LENGTH

PAGE TABLE          ⌐46A

| 0 | PFRA | | 0 | I | F | 0 | /// |
| | | | | | | | |
| | | | | | | | |
| I | EXTENDED ENTRY ADDRESS | | | | | | |
| | | | | | | | |
| I | EXTENDED ENTRY ADDRESS | | | | | | |
| | | | | | | | |

0⌐               2⌐      3⌐

PFRA:   PAGE FRAME REAL ADDRESS
I:        PAGE INVALID BIT
P:       PAGE PROTECTION BIT

EXTENDED PAGE TABLE        ⌐48

| 0 | PFRA ADDRESS | 0 | I | P | 0 | /// | FIELD PROTECTION BITS |
| | | | | | | | |
| | | | | | | | |
| | | | | | | | |
| | | | | | | | |

11